# EUROPEAN PATENT APPLICATION

(11) **EP 0 592 727 A1**
(43) Date of publication of application: **20.04.1994**
(21) Application number: 92203136.4
(22) Date of filing: 13.10.1992
(51) Int. Cl.: C25D 21/20, C02F 1/04

(54) **Process for treating a surface of an article**

(71) Applicant: SurTec GmbH, D-65468 Trebur (DE)
(72) Inventor: Gaul, Norbert, D-13357 Berlin (DE)
(74) Representative: KUHNEN, WACKER & PARTNER

(57) **Abstract**

A process is provided for the treatment of a surface of an article in a chemicals containing aqueous treatment bath and subsequently in one or more aqueous rinsing baths, whereby a minor part of the chemicals used in the treatment bath is carried over into the first of said rinsing baths, whereby part of said rinsing bath is fed back into the treatment bath and whereby water is removed from the treatment bath and water is fed into one of the rinsing baths, characterised in that
(a) the water removed from the treatment bath is a continuous vapour flow obtained by
   (i) blowing dried gas through the treatment bath; and
   (ii) having the humidity of said dried gas increased by the treatment bath;
(b) said continuous vapour flow is fed into a cooler for removing water therefrom said water being the water fed into one of the rinsing baths; and
(c) the dried gas flow coming out of the cooler is fed back into the treatment bath.
This process is especially suitable for use in one or more treatment steps in a galvanic electroplating system.

## Description

### FIELD OF THE INVENTION

The present invention relates to a process for treating articles in a chemicals containing treatment bath and subsequently rinsing said treated articles in one or more rinsing baths. More in particular, the invention relates to a process for treating and rinsing articles whereby the waste water resulting from said process is recovered. The invention is of especial interest for galvanic electroplating processes, wherein a thin coating of some metal is deposited on to the surface of an article through electrolytic deposition.

### PRIOR ART AND BACKGROUND OF THE INVENTION

In recent years, increasingly severe measures aimed at reducing the waste streams of treatment chemicals from chemical plants have been issued. Furthermore, continuously rising costs of raw materials have been experienced. As a consequence, more and more processes for the recovery of chemicals, particularly of environmentally unacceptable chemical compounds, are being developed and applied. In this respect, several processes have been proposed for the recovery of chemicals used in processes for treating articles in chemicals containing treatment baths such as those applied in galvanic electroplating systems.

In German patent 39 39 222 (Schering AG), a process is disclosed for the rinsing or spraying of articles treated in an aqueous bath solution, wherein fresh rinsing water is obtained from the aqueous bath solution by separating out the water fraction from this solution in a separator. The rinsing water so obtained is passed to the last station of a rinsing line comprising several rinsing baths, from which it flows in cascade fashion through previous rinsing stations to a collecting vessel. The active bath solution fraction from which rinsing water was removed also flows into this vessel and the mixture present in the collecting vessel is pumped back into the active bath solution.

In German patent application 27 29 270 (Stolle), a process is disclosed for the recovery of electrolyte carried over from an active electroplating treatment bath (containing a solution of the electrolyte) into rinsing baths. This recovery is achieved by continuously pumping the electrolyte solution from out of the treatment bath through a vacuum-evaporative cooling apparatus and the back into the treatment bath. In the evaporative cooling apparatus, the water present in the electrolyte solution is condensed and removed from said solution, and this water is fed into the last station of a rinsing line comprising several rinsing baths. Furthermore the rinsing bath solution of this last station of the rinsing line is pumped through previous stations into the electroplating treatment bath such that a cyclical process of the water removed from the electrolyte solution is achieved. As a result of this cyclical process, no contaminated rinsing water needs to be fed into the drains where it could cause environmental pollution. It is noted that the dilution effect of the rinsing water fed into the electroplating treatment bath is stated to be counter-balanced by evaporation from said treatment bath.

In US patent 4,952,290 (AMP Inc.), a waste water treatment and recycling system for an electroplating line is disclosed, wherein the rinse water from the first stage of a cascade rinse system is fed into a vacuum chamber. Using a high degree of vacuum, the rinse water is made to evaporate and the resulting vapours pass over cooling coils. The resulting condensate is collected as distilled water and pumped back into the rinse system. Concurrently, the chemical constituents in the solution in the vacuum chamber build up to "electroplating bath" strength. When the concentration of these constituents has reached some predetermined level, the solution in the vacuum chamber is pumped back to the appropriate electroplating bath.

In all these prior art documents processes are described wherein environmental pollution by draining contaminated rinsing water is avoided. However, reduction of air pollution caused by vapours originating from the chemicals containing treatment baths is not achieved when applying these processes.
It is an object of the present invention to provide a process for chemically treating and rinsing the surface of articles which process is effluent-free and wherein the above-indicated air pollution is minimised.
It is an other object of the invention to provide a process wherein the overall use of energy is minimised.
It was surprisingly found that these and other objects could be achieved when applying the process of the present invention.

### DEFINITION OF THE INVENTION

The present invention provides a process for the treatment of a surface of an article in a chemicals containing aqueous treatment bath and subsequently in one or more aqueous rinsing baths, whereby a minor part of the chemicals used in the treatment bath is carried over into the first of said rinsing baths, whereby part of said rinsing bath is fed back into the treatment bath and whereby water is removed from the treatment bath and water is fed into one of the rinsing baths, characterised in that
(a) the water removed from the treatment bath is a continuous vapour flow obtained by
   (i) blowing dried gas through the treatment bath; and
   (ii) having the humidity of said air or vapour increased by the treatment bath;
(b) said continuous vapour flow is fed into a cooler for removing water therefrom said water being the water fed into one of the rinsing baths; and
(c) the dried gas flow coming out of the cooler is fed back into the treatment bath.

### DETAILED DESCRIPTION OF THE INVENTION

The invention provides a process for the chemical treatment of a surface which may generally be any hard surface such as a plastic surface or a metal surface. However, the invention relates particularly to a process for treating a metal surface, especially to a coating process of such a metal surface in a galvanic electroplating system.

Similarly, the treating process of the invention may generally be any chemical process for treating surfaces but it is particularly suitable to be applied in an electroplating system for obtaining a coated metal surface.

The process is carried out in a system comprising a chemicals containing aqueous treatment bath and one or more aqueous rinsing baths. For obtaining good results with respect to the quality of the surface after the chemical treatment, the chemically treated surface is preferably rinsed in several rinsing baths lined up in series.

After a period of operation during which chemicals are continuously being carried over from the treatment bath into the rinsing baths, a build-up of chemicals results in these rinsing baths. For maintaining an effective rinsing operation, it is however important to keep the concentration of chemicals in the rinsing solutions applied, at a low level. Water is, therefore, added to the rinsing part of the system. As described in the prior art, this water is desirably obtained from the treatment solution in an apparatus which is continuously fed with a flow from the aqueous treatment bath in order to obviate the necessity to add fresh water and drain chemicals containing rinse solution. Furthermore, it is known that a cyclical water flow can effectively established by feeding the treatment bath with a continuous flow of aqueous rinsing solution from out of the first rinsing station when a series of rinsing baths is applied.

In order to reduce air pollution caused by vapours from the treatment bath, dried gas (air or vapour) is blown into said bath for obtaining a continuous vapour flow out of the treatment bath. This vapour flow is fed into a heat pump containing a cooler, wherein the water present in said vapour flow is condensed and removed therefrom. This water is fed into one of the stations of a rinsing line, desirably the last station. For obtaining a cyclical process, the rinsing solution in this last station is preferably fed through previous stations into the aqueous treatment bath. Furthermore, a second cyclical process, being a cyclical process of the vapour flow, is established by blowing the dried vapour flow coming out of the cooler back into the treatment bath.

For obtaining an adequate level of entrained water vapours in the vapour flow out of the treatment bath, the dried gas flow blown through the treatment bath is preferably heated up above the operational temperature of the aqueous solution in the treatment bath, before being blown into said bath.

The energy requirement of the process of the invention may be effectively reduced by applying a heat pump containing the cooler and using part of the heat produced by the cooler for heating up the dried gas flowing out of the heat pump back to the treatment bath.

To obtain an optimal cyclical water process in the process of the invention, the water condensed and removed in the cooler of the heat pump is preferably continuously fed into the last rinsing station containing an aqueous rinsing solution with the lowest concentration of chemicals. For the same purpose, this cyclical water flow is most preferably established by continuously pumping a rinsing solution out of the bottom of a rinsing bath with a lower concentration of chemicals into the top of a previous rinsing bath with a higher concentration of chemicals or treatment bath.

As discussed, the process of the invention includes both an integrated water reuse and recovery system and a cyclical process in respect of the vapour flow applied. As a consequence, this process may result in a complete elimination of liquid waste streams and a significant reduction of air pollution, when used in one or more treatment steps in a galvanic electroplating system.

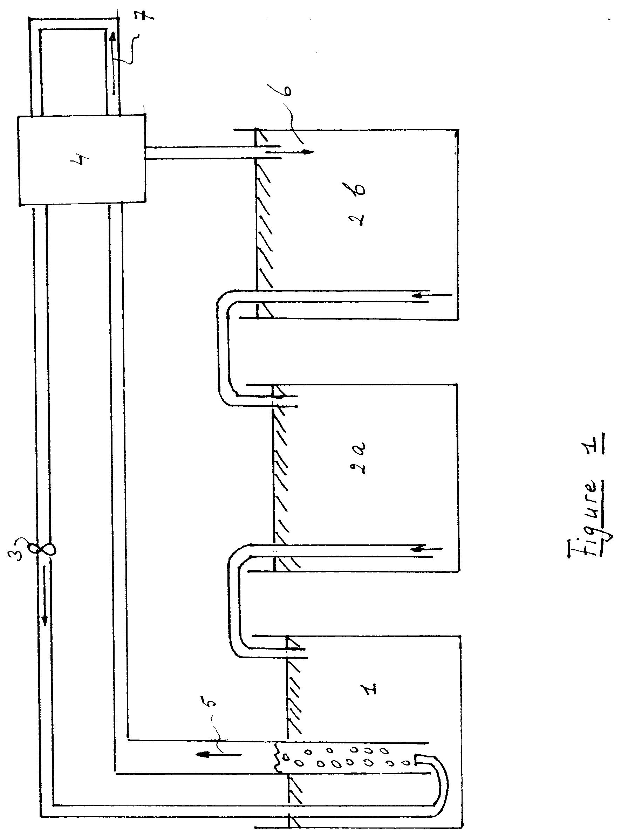

The invention is further illustrated by Figure 1, giving a schematic view of an effluent-free treating and rinsing process according to the present invention. In this Figure, (1) indicates the treatment bath for chemically treating the surface of articles and (2a) and (2b) are rinsing baths in which the chemically treated articles are successively immersed. The number of these rinsing baths can be increased to as many as can be economically justified. As the rinsing water is pumped in a direction which is opposite to the direction in which the articles are rinsed, the concentration of chemicals in rinsing bath (2b) is lower than that in rinsing bath (2a).

By applying a dried gas flow blown into the treatment bath (1) with a blower (3), a vapour flow (5) is flowing out of the treatment bath and fed into a heat pump (4). This heat pump contains a cooler section and a heater section which sections are interconnected. In the cooler section, condensed water is continuously formed and removed from the vapour flow (5), and the resulting water flow (6) is fed into the rinsing bath with the lowest concentration of chemicals. The dried vapour flow (7) flowing out of the cooler section is heated up by feeding it through the heater section of heat pump (4) (not shown).

## Claims

1. Process for the treatment of a surface of an article in a chemicals containing aqueous treatment bath and subsequently in one or more aqueous rinsing baths, whereby a minor part of the chemicals used in the treatment bath is carried over into the first of said rinsing baths, where part of said rinsing bath is fed back into the treatment bath and whereby water is removed from the treatment bath and water is fed into one of the rinsing baths, characterised in that
(a) the water removed from the treatment bath is a continuous vapour flow obtained by
(i) blowing dried gas through the treatment bath; and
(ii) having the humidity of said dried gas increased by the treatment bath;
(b) said continuous vapour flow is fed into a cooler for removing water therefrom said water being the water fed into one of the rinsing baths; and
(c) the dried gas flow coming out of the cooler is fed back into the treatment bath.

2. Process according to claim 1, wherein the dried gas flow is heated up above the operational temperature of the treatment bath before being blown into said bath.

3. Process according to claim 2, wherein the dried gas flow flowing out of the cooler is fed through a heat exchanger where it is heated up using at least part of the heat produced by the cooler.

4. Process according to any of claims 1-3, wherein the water removed from the vapour flow, is continuously fed into the rinsing bath having the lowest concentration of chemicals.

5. Process according to any of claims 1-4, wherein generally an aqueous bath solution is pumped out of an aqueous rinsing bath with a lower chemicals concentration into a preceding aqueous rinsing or treatment bath with a higher chemicals concentration such that a cyclical process of the water blown out of the treatment bath and condensed in the cooler is obtained.

6. Process according to claim 5, wherein the aqueous bath solution is pumped from the bottom part of the bath with the lower concentration into the upper part of the bath with the higher concentration.

7. Process according to any of claims 1-6, wherein the process is applied in one or more treatment steps in a galvanic electroplating system.
